# EUROPÄISCHE PATENTSCHRIFT

(11) **EP 1 147 039 B1**
(45) Veröffentlichungstag und Bekanntmachung des Hinweises auf die Patenterteilung: **30.11.2005**
(21) Anmeldenummer: 00979420.7
(22) Anmeldetag: 12.10.2000
(51) Int. Cl.: B60S 1/24

(54) **SCHEIBENWISCHANLAGE FÜR FAHRZEUGE**
WINDSCREEN WIPER ARRANGEMENT FOR VEHICLES
EQUIPEMENT D'ESSUIE-GLACE DE VEHICULES

(30) Priorität: 20.10.1999 DE 19950614
(43) Veröffentlichungstag der Anmeldung: 24.10.2001
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2000/003587
(87) Internationale Veröffentlichungsnummer: WO 2001/028826

(56) Entgegenhaltungen:
- DE-A- 4 444 066
- US-A- 3 226 755
- US-A- 5 920 948

## Beschreibung

### Stand der Technik

Die Erfindung betrifft eine Scheibenwischanlage für Fahrzeuge mit mindestens einem mindestens einen Wischarm aufweisenden Wischhebelgestänge gemäß Anspruch 1.

Scheibenwischanlagen der hier angesprochenen Art sind bekannt. Sie werden beispielsweise zum Reinigen der Frontscheibe eines Fahrzeugs eingesetzt und umfassen ein mindestens einen Wischarm aufweisendes 4-Gelenk-Wischhebelgestänge, das eine Hub-SchwenkBewegung des Wischarms ermöglicht. Außerdem sind auch Wischhebelgestänge bekannt, an denen der Wischarm an einem Schwenkhebel befestigt ist, der wiederum drehfest mit einer mit einem Drehmoment beaufschlagbaren Achse gekoppelt ist. Bei dieser Ausführungsform wird der Wischarm lediglich mit der feststehend angeordneten Achse verschwenkt; der Wischarm führt also keine Hub-Bewegung aus.

Die Scheibenwischanlage ist unterhalb der Frontscheibe an der Karosserie des Fahrzeugs angebracht, wobei die Achse, mit der der den Wischarm aufweisende Schwenkhebel drehfest koppelbar ist, im Bereich einer Verbindungsstelle zwischen einer A-Säule, einer Stirnwand und einer seitlichen Außenhaut der Karosserie angeordnet ist. Da dieser Karosseriebereich bei einem Aufprall hochbelastet ist, sind hier üblicherweise mehrere Bleche vorgesehen, die der Versteifung der Karosserie dienen sollen. Außerdem ist in diesem Bereich im allgemeinen ein Scharnier einer Motorhaube angebracht. Aufgrund des durch die Karosserie oder Einrichtungen des Fahrzeugs eingeschränkten Platzangebots muss die antreibende Achse mit dem daran angebrachten, den Wischarm aufweisenden Schwenkhebel in einem großen Abstand von der A-Säule entfernt angeordnet werden. Diese Anordnung führt dazu, dass in einer Umkehrlage des Wischhebelgestänges, in der der Wischarm nahe der A-Säule angeordnet ist, ein großer Abstand zwischen dem Innenkreis eines Wischfeldes des Wischarms und der A-Säule besteht. Dies führt zu einem ungereinigten dreieckförmigen Scheibenbereich der A-Säule und damit zu einer verschlechterten Sicht für den Fahrer.

Die nicht vorveröffentlichte europäische Anmeldung EP-A-1 117 573 (WO-A-01/08946), die Stand der Technik nach Artikel 54(3) und (4) EPÜ bildet und somit für die Frage der erfinderischen Tätigkeit nicht von Bedeutung ist , zeigt eine Scheibenwischanlage für Fahrzeuge mit mindestens einem mindestens einen Wischarm aufweisenden Wischhebelgestänge, das einen an einer ortsfesten ersten Achse angeordneten ersten Schwenkhebel und einen um eine ortsfest angeordnete zweite Achse frei drehbaren zweiten Schwenkhebel, wobei der erste Schwenkhebel über ein erstes Gelenk und der zweite Schwenkhebel über ein zweites Gelenk mit einem Koppelelement verbunden sind, und mit einer Antriebseinrichtung, die eine in einem Abstand zu den ersten und zweiten Achsen angeordnete Antriebswelle aufweist, mit deren Hilfe mindestens eine Gelenkstange oszillierend verlagerbar ist, wobei die Gelenkstange über ein Gelenk mit einem drehfest mit der ersten Achse gekoppelten Koppelteil verbunden ist.

### Vorteile der Erfindung

Die erfindungsgemäße Scheibenwischanlage mit den Merkmalen des Anspruchs 1 weist demgegenüber den Vorteil auf, dass das Wischhebelgestänge in einem geringen Abstand zu einer A-Säule oder eines Motorhaubenscharniers angeordnet werden kann. Dabei ist die drehfeste Verbindung zwischen dem ersten Schwenkhebel und der drehmomentbeaufschlagbaren ersten Achse lösbar ausgebildet, beispielsweise als Wellen-Naben-Verbindung, Kegelverbindung und dergleichen. Außerdem kann auch die Kopplung zwischen der drehmomentfreien zweiten Achse und dem von dieser lediglich geführten zweiten Schwenkhebel lösbar ausgebildet sein, beispielsweise als Steckverbindung. Aufgrund dieser Ausgestaltung ist eine Anordnung der zweiten Achse, mit der der zweite Schwenkhebel verbunden ist, in unmittelbarer Nähe einer Seitenwand der Karosserie im Bereich der A-Säule oder des Motorhaubenscharniers möglich.

Das Wischhebelgestänge weist hierzu einen mit einer ortsfest angeordneten ersten Achse drehfest koppelbaren ersten Schwenkhebel und einen um eine ortsfest angeordnete zweite Achse frei drehbaren zweiten Schwenkhebel auf. Die zweite Achse wird also nicht mit einem Drehmoment beaufschlagt, sondern dient lediglich der Führung der Schwenkbewegung des zweiten Schwenkhebels. Die ersten und zweiten Schwenkhebel sind jeweils gelenkig mit einem Koppelelement verbunden. Hierzu sind erste und zweite Gelenke vorgesehen. Außerdem weist die Scheibenwischanlage eine Antriebseinrichtung auf, die eine in einem Abstand zu den ersten und zweiten Achsen angeordnete Antriebswelle besitzt, mit deren Hilfe mindestens eine Gelenkstange oszillierend verlagerbar ist, wobei die Gelenkstange über ein Gelenk mit einem drehfest mit der ersten Achse gekoppelten Koppelteil verbunden ist. Die erste Achse ist also mit einem Drehmoment beaufschlagbar, wodurch das Wischhebeigestänge und somit auch der daran angeordnete Wischarm entsprechend verschwenkt werden. Aufgrund dieser Ausgestaltung kann eine optimale Ausgangs(Park-)Lage des Wischarms, die beispielsweise außerhalb des Sichtbereichs eines Fahrzeuginsassen liegt, und gleichzeitig eine Umkehrlage des Wischhebelgestänges zu realisiert werden, bei der der Wischarm möglichst parallel zur A-Säule angeordnet ist.

Bei einer vorteilhaften Ausführungsform der Scheibenwischanlage ist der Wischarm am zweiten Schwenkhebel befestigt oder mit diesem verbunden. Der Wischarm und der zweite Schwenkhebel weisen also gleiche Schwenkachsen auf, die mit der Längsmittel(Dreh-)achse der zweiten Achse zusammenfallen. Nach einer anderen Ausführungsvariante ist der Wischarm mit dem ersten Schwenkhebel gekoppelt, wobei hier die Schwenkachse des Wischarms identisch ist mit der Drehachse der ersten Achse.

Nach einer Weiterbildung der Erfindung ist vorgesehen, dass die erste Achse zwischen der Antriebswelle und der zweiten Achse angeordnet ist. Dies ermöglicht eine Anordnung der zweiten Achse in einem sehr geringen Abstand zum Beispiel zum Motorhaubenscharnier oder der A-Säule und gleichzeitig einen großen Abstand zwischen der Antriebswelle und der zweiten Achse. Die Antriebswelle kann also weiter zur Fahrzeugmitte hin angeordnet werden. Die zweite Achse und die Antriebswelle sind vorzugsweise möglichst nahe zueinander angeordnet, um einen kompakten Aufbau der Lagerung der zweiten Achse, mit deren Hilfe der zweite Schwenkhebel und der gegebenenfalls daran angebrachte Wischarm geschwenkt werden können, zu realisieren.

Ein bevorzugtes Ausführungsbeispiel der Scheibenwischanlage zeichnet sich dadurch aus, dass die ersten und zweiten Gelenke als Kugelgelenke ausgebildet sind. Dies ist dadurch möglich, da das Koppelelement, das die ersten und zweiten Schwenkhebel miteinander verbindet, lediglich die Bewegung zwischen den beiden Schwenkhebeln überträgt und der Wischarm -anders als bei den bekannten 4-Gelenk-Wischhebelgestängen- nicht am Koppelelement angeordnet ist, sondern mit einem der beiden Schwenkhebel verbunden ist. Über das Koppelelement werden daher keine Momente, sondern nur Zug- und Druckkräfte übertragen, die ohne weiteres von Kugelgelenken abgestützt werden können, ohne dass die Kugelgelenke dabei beschädigt werden. Nach einer Ausführungsvariante der Scheibenwischanlage sind die ersten und zweiten Schwenkhebel hierzu jeweils mit einem Kugelbolzen versehen, der beispielsweise aufgenietet werden kann. Die Kugelgelenke erleichtern den Zusammenbau des Wischhebelgestänges, da das Koppelelement erst nach der Montage und gegebenenfalls nach der Lackierung der Schwenkhebel und gegebenenfalls des Wischarms in einfacher Weise aufgeklipst werden kann. Selbstverständlich ist es auch möglich, dass die ersten und zweiten Gelenke identisch wie die bei dem bekannten 4-Gelenk-Wischhebelgestänge eingesetzten Gelenke aufgebaut sind, deren Aufbau jedoch deutlich aufwendiger und damit teurer ist als der der Kugelgelenke.

Schließlich wird auch ein Ausführungsbeispiel der Scheibenwischanlage bevorzugt, das sich dadurch auszeichnet, dass am Wischarm mindestens eine mit einer unter Druck stehenden Flüssigkeit beaufschlagbare Düse angeordnet ist. Die Flüssigkeitszufuhr zur Düse ist vorzugsweise derart gesteuert, dass lediglich bei einer Aufwärtsbewegung des Wischarms, also wenn dieser aus seiner Ausgangslage heraus in das Sichtfeld eines Fahrzeugsinsassen verlagert wird, die Flüssigkeit auf die Scheibe gespritzt wird.

Weiter vorteilhafte Ausführungsformen der Scheibenwischanlage ergeben sich aus den übrigen Unteransprüchen.

### Zeichnung

Im folgenden wird die Erfindung anhand der Zeichnung näher erläutert. Dabei zeigen:
- Figur 1: eine Prinzipskizze eines ersten Ausführungsbeispiels einer Scheibenwischanlage;
- Figuren 2A bis 2C: jeweils eine Prinzipskizze der Scheibenwischanlage gemäß Figur 1 mit einem Ausführungsbeispiel eines Wischhebelgestänges in verschiedenen Stellungen;
- Figur 3: eine Vorderansicht einer Frontscheibe eines Fahrzeugs und ein weiteres Ausführungsbeispiel der Scheibenwischanlage und
- Figur 4: eine perspektivische Darstellung eines weiteren Ausführungsbeispiels der Scheibenwischanlage.

### Beschreibung der Ausführungsbeispiele

Die im folgenden beschriebene Scheibenwischanlage 1 ist allgemein einsetzbar, beispielweise für Kraftfahrzeuge (Pkw, Lkw, Bus), Schienen- oder Wasserfahrzeuge. Rein beispielhaft wird im folgenden davon ausgegangen, dass es sich um eine Scheibenwischanlage für ein Kraftfahrzeug handelt.

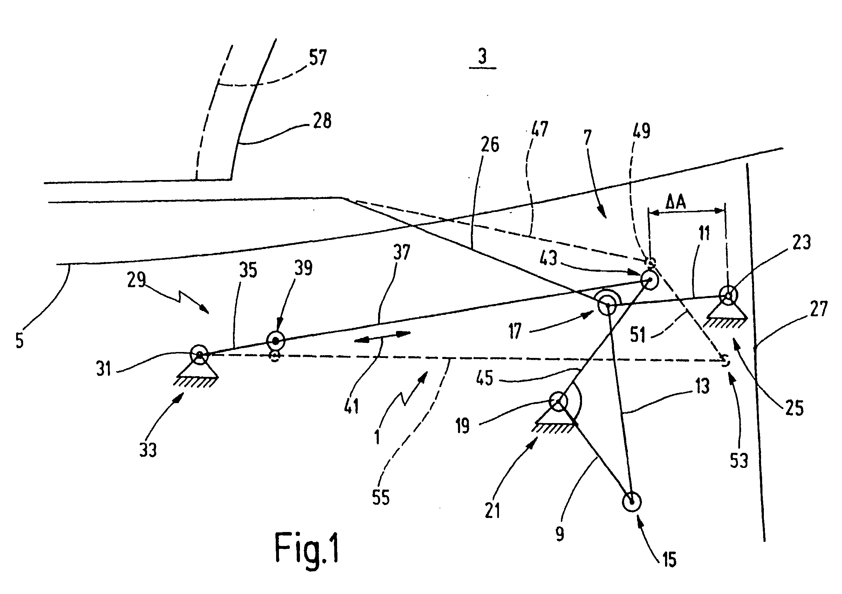

Figur 1 zeigt eine Prinzipskizze eines Ausführungsbeispiels der mit durchgezogenen Linien dargestellten Scheibenwischanlage 1 für eine Scheibe des Fahrzeugs, hier einer Frontscheibe 3, von der lediglich der untere Rand 5 teilweise erkennbar ist. Die in einem unterhalb der Frontscheibe liegenden Bereich 3 angeordnete Scheibenwischanlage 1 weist ein Wischhebelgestänge 7 auf, das einen ersten Schwenkhebel 9 und einen zweiten Schwenkhebel 11 aufweist, die gelenkig mit einem Koppelelement 13 verbunden sind. Es sind daher zwischen dem ersten Schwenkhebel 9 und dem Koppelelement 13 ein erstes Gelenk 15 und zwischen dem zweiten Schwenkhebel 11 und dem Koppelelement 13 ein weiteres, zweites Gelenk 17 vorgesehen.

Der erste Schwenkhebel 9 ist drehfest mit einer ersten Achse 19 einer ortsfest angeordneten ersten Lagerung 21 verbunden. Der zweite Schwenkhebel 11 ist an seinem dem zweiten Gelenk 17 abgewandten Ende frei um eine zweite Achse 23 einer zweiten Lagerung 25 drehbar, das heißt, dass die zweite Achse 23, die beispielsweise als Blindlagerwelle ausgebildet ist, lediglich zur drehbeweglichen Führung und gegebenenfalls zum Halten des zweiten Schwenkhebels 11 dient. Die zweite Achse 23 ist in einem sehr kleinen Abstand zu einem lediglich angedeuteten Karosserieteil 27 des Fahrzeugs, beispielsweise einem Scharnier einer Motorhaube, angeordnet.

Aus allem wird deutlich, dass das Wischhebelgestänge 7 ein 4-Gelenk-Wischhebelgestänge ist.

An dem zweiten Schwenkhebel 11 ist ein an die Frontscheibe 3 anlegbarer Wischarm 26 befestigt, der einen länglichen Grundkörper mit einem hier einen abgewinkelten Verlauf aufweist. Am Wischarm 26 ist mindestens ein in Figur 1 nicht dargestelltes Wischelement, beispielsweise ein Wischgummi, angebracht. Im Betrieb der Scheibenwischanlage 1 wird der Wischarm 26 gemeinsam mit dem von der zweiten Achse 23 geführten zweiten Schwenkhebel 11 um einen definierten Winkelbereich verschwenkt. Aufgrund der Ausgestaltung des Wischhebelgestänges 7 führt der Wischarm 26 dabei keinen Hub aus, sondern wird ausschließlich verschwenkt, wodurch ein teilkreisringförmiges Wischfeld auf der Frontscheibe 3 gereinigt werden kann, von dem in Figur 1 lediglich sein unterer Rand 28 erkennbar ist.

Zum Betreiben des Wischhebelgestänges 7 ist eine Antriebseinrichtung 29 vorgesehen, die eine mit einem Antriebs- oder Bremsmoment beaufschlagbare Antriebswelle 31 umfasst, die Teil einer ortsfest angeordneten dritten Lagerung 33. Durch eine Rotation der Antriebswelle 31 um ihre senkrecht zur Bildebene der Figur 1 verlaufende Längsmittel(Dreh-)achse wird mit Hilfe eines Übertragungsglieds 35 eine Gelenkstange 37 in im wesentlicher horizontaler Richtung (Doppelpfeil 41) oszillierend verlagert, wobei die Gelenkstange 37 über ein drittes Gelenk 39 gelenkig mit dem Übertragungsglied 35 verbunden ist. Während also das hier von einem Hebel gebildete Übertragungsglied 35 gemeinsam mit Antriebswelle 31 rotiert, wird die Gelenkstange 37 translatorisch in Richtung auf das Wischhebelgestänge 7 und in entgegengesetzter Richtung verlagert. Die Gelenkstange 37 ist über ein viertes Gelenk 43 mit einem Koppelteil 45 verbunden, das wiederum drehfest mit der ersten Achse 19 gekoppelt ist.

In Figur 1 ist ferner mit gestrichelten Linien eine bekannte Scheibenwischanlage dargestellt, die ebenfalls ein 4-Gelenk-Wischhebelgestänge aufweist, dessen Bauraum im wesentlichen gleich groß ist, wie der des erfindungsgemäßen Wischhebelgestänges 7. Das bekannte Wischhebelgestänge weist einen Wischarm 47 auf, der drehfest mit einer stationär angeordneten Achse 49 verbunden ist. Mit Hilfe einer Schwinge 51, die über ein Gelenk 53 mit einer oszillierend verlagerbaren Gelenkstange 55 verbunden ist, kann die Achse 49 in und entgegen dem Uhrzeigersinn verschwenkt werden. Die Achse 49 ist mittels der Gelenkstange 55 mit einem Drehmoment beaufschlagbar. Zur translatorischen Verlagerung der Gelenkstange 55 ist hier eine Antriebseinrichtung vorgesehen, die den gleichen Aufbau aufweist, wie die Antriebseinrichtung 29 der Scheibenwischanlage 1. Von dem Wischfeld, das von dem Wischarm des bekannten Wischhebelgestänges durchfahren werden kann, ist in Figur 1 lediglich dessen unterer Rand 57 erkennbar. Es bleibt festzuhalten, dass das bekannte 4-Gelenk-Wischhebelgestänge lediglich eine ortsfeste Lagerung aufweist, wobei die Schwenkachse des Wischarms 47 mit der Drehachse der Achse 49 zusammenfällt, die demgemäß in einem Abstand zum Karosserieteil 27 angeordnet werden muss, der um den Betrag des Abstands ΔA zwischen der Achse 49 des bekannten Wischhebelgestänges und der zweiten Achse 23 des Wischhebelgestänges 7 größer ist als der Abstand zwischen der zweiten Achse 23, um die der Wischarm 26 geschwenkt wird, und dem Karosserieteil 27, da ansonsten die Gelenkstange 55 des bekannten Wischhebelgestänges am Karosserieteil 27 anstoßen würde.

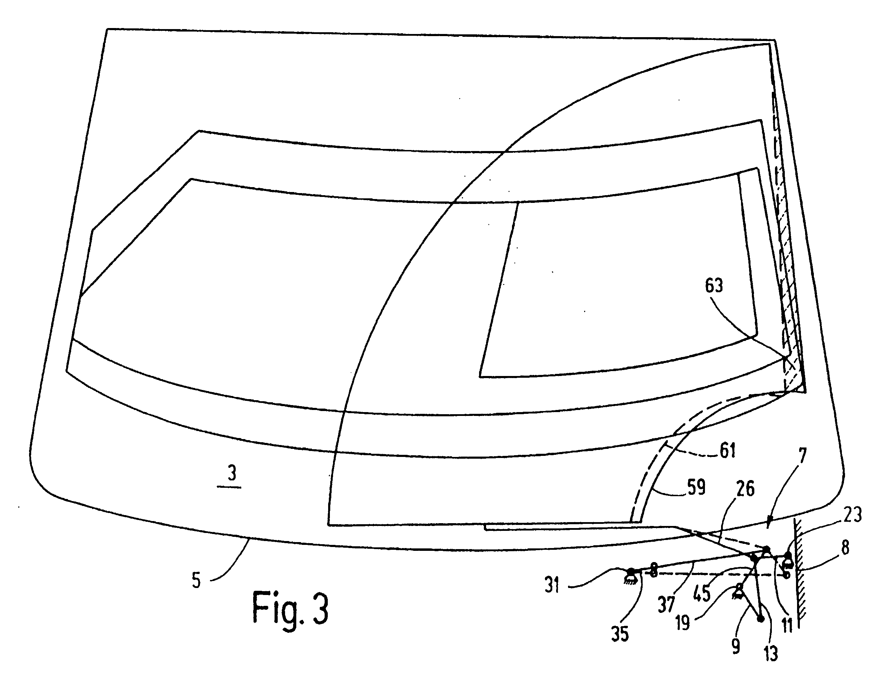

Die Vorteile, die sich durch das Wischhebelgestänge 7 gegenüber dem bekannten Wischhebelgestänges ergeben, werden im folgenden anhand der Figur 3 näher erläutert.

Aus Figur 3, die die zu reinigende Frontscheibe 3 in Vorderansicht zeigt, sind mit durchgezogener Linie das mit dem Wischhebelgestänge 7 realisierbare, teilkreisringförmige Wischfeld 59 und mit gestrichelter Linie das mit dem bekannten, anhand von Figur 1 beschriebenen Wischhebelgestänge realisierbare Wischfeld 61 dargestellt. Es ist ersichtlich, dass das Wischfeld 59 um einen schraffiert dargestellten, keilförmig ausgebildeten Bereich 63 größer ist als das Wischfeld 61. Der keilförmige Bereich 63 befindet sich am Seitenrand der Frontscheibe 3, unmittelbar neben der nicht dargestellten A-Säule der Fahrzeugkarosserie. Der Vergleich zeigt, dass bei im wesentlichen gleich großen Bauraum die Scheibenwischanlage 1 mit ihrem Wischhebelgestänge 7 ein größeres Wischfeld realisierbar ist als mit dem konventionellen 4-Gelenk-Wischhebelgestänge, wodurch die Sicherheit und der Komfort verbessert werden. Aus Figur 3 ist ferner ersichtlich, dass sich der Wischarm 26 in seiner Umkehrlage, in der eine Schwenkrichtungsumkehr des Wischarms 26 stattfindet und in der er seinen kleinsten Abstand zur A-Säule aufweist, im wesentlichen parallel zur A-Säule angeordnet ist, die wiederum in etwa parallel zum Karosserieteil 27 verläuft.

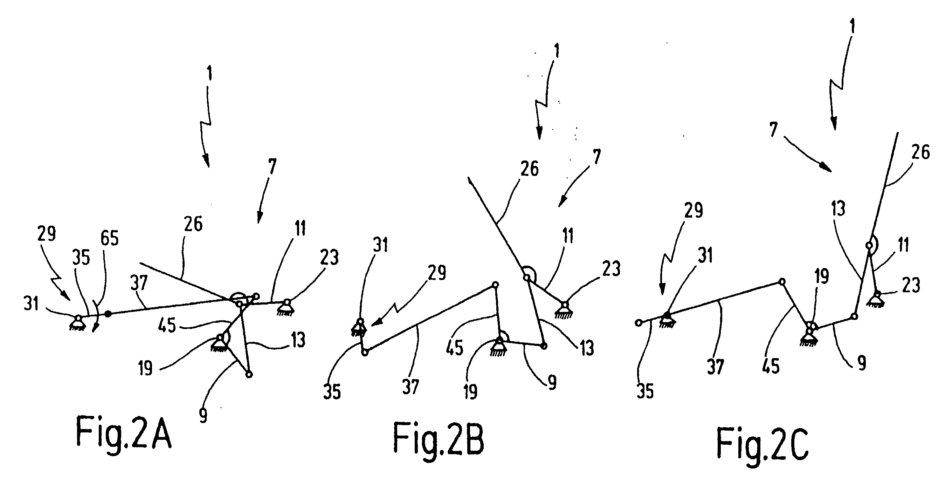

Im folgenden wird die Kinematik der Scheibenwischanlage 1 anhand der Figuren 2A bis 2C näher erläutert, die die Scheibenwischanlage 1 in unterschiedlichen Momentanstellungen zeigt.

In der in Figur 2A dargestellten Stellung befindet sich das Wischhebelgestänge 7 in einer Ausgangslage, in der der nicht dargestellte Teil des Wischarms 26, der das Wischelement aufweist, im wesentlichen parallel zum unteren Rand 5 der Frontscheibe 3 in einer ersten Endlage angeordnet ist (Figuren 1 und 3). In der Ausgangslage sind das Übertragungsglied 35 der Antriebseinrichtung 29 und die Gelenkstange 37 fluchtend zueinander angeordnet. Um den Wischzyklus zu starten, bei dem die Frontscheibe 3 zunächst durch ein Verschwenken des Wischarms 26 im Uhrzeigersinn gereinigt, also das Wischfeld 59 (Figur 3) vom Wischarm 26 überstrichen wird, wird die Antriebswelle 31 mit Antriebsmoment beaufschlagt, wodurch das Übertragungsglied 35 gemeinsam mit der Antriebswelle 31 im Uhrzeigersinn in Rotation versetzt werden, wie in Figur 2A mit einem Pfeil 65 angedeutet. Dadurch wird das Wischhebelgestänge 7 in eine in Figur 2B dargestellte Strecklage verlagert, in der der am zweiten Schwenkhebel 11 befestigte Wischarm 26 bereits einen Teil des Wischfeldes 59 (Figur 3) überstrichen hat. Das um die Drehachse der Antriebswelle 31 rotierende Übertragungsglied 35 gelangt im folgenden von der in Figur 2B dargestellten Stellung in die in Figur 2C dargestellte Stellung, in der es erneut mit der Gelenkstange 37 fluchtet. In der in Figur 2C dargestellten Umkehrlage ist der Wischarm 26 in seiner anderen Endlage angeordnet, in der er seinen geringsten Abstand zur A-Säule aufweist. Wird nun das Übertragungsglied 35 weiter im Uhrzeigersinn gedreht, wird der Wischarm 26 durch ein Verschwenken des zweiten Schwenkhebels 11 abwärts bewegt, bis er seine erste Endlage beziehungsweise das Wischhebelgestänges seine Ausgangsstellung erreicht hat. Während der Abwärtsbewegung des Wischarms 26 nimmt das Wischhebelgestänges erneut die in Figur 2B dargestellte Strecklage kurzzeitig ein.

Es bleibt festzuhalten, dass die Antriebswelle 31 während eines Wischzyklus' ausschließlich in einer Richtung rotiert, wobei die Rotationsgeschwindigkeit vorzugsweise konstant ist, so dass eine gleichmäßige Bewegung des Wischarms 26 erreicht wird.

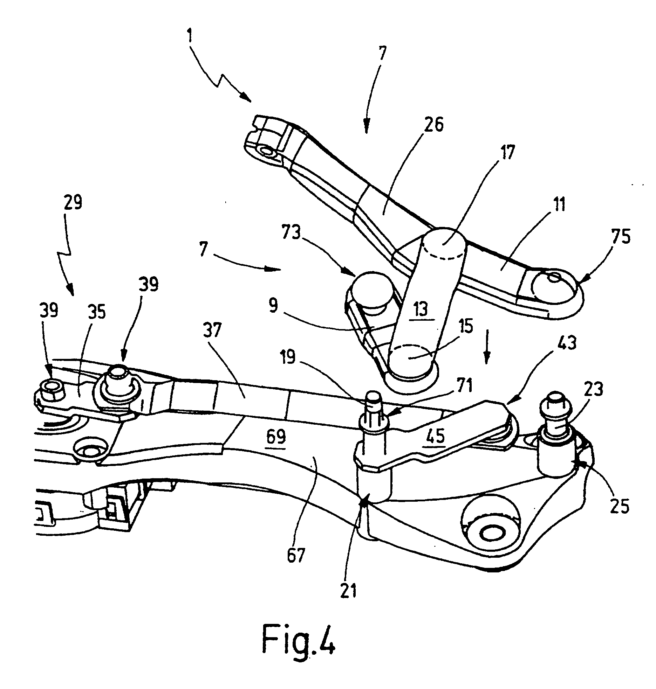

Figur 4 zeigt eine perspektivische Darstellung eines Ausführungsbeispiels der Scheibenwischanlage 1. Gleiche Teile sind mit gleichen Bezugszeichen versehen, so dass insofern auf die Beschreibung zu den vorangegangenen Figuren verwiesen wird.

Aus Figur 4 ist ersichtlich, dass das Wischhebelgestänge 7, das im von der Antriebseinrichtung 29 abgehobenen Zustand dargestellt ist, eine vormontierbare Baueinheit bildet, die den ersten Schwenkhebel 9 und den zweiten Schwenkhebel 11 mit dem daran angebrachten Wischarm 26 sowie das gelenkig mit dem ersten und zweiten Schwenkhebeln 9, 11 verbundenen Koppelelement 13 umfasst.

Die Antriebseinrichtung 29 ist auf einer Konsole 67 befestigt, die vorzugsweise als Druckgussteil ausgebildet ist. Bei einem anderen, nicht dargestellten Ausführungsbeispiel ist die Konsole aus Kunststoff, vorzugsweise in einem Spritzgussverfahren, hergestellt. Die ersten und zweiten Lagerungen 21, 25 sind hier einstückig mit der Konsole 67 ausgebildet. Die drehfeste Verbindung zwischen dem ersten Schwenkhebel 9 und der im wesentlichen senkrecht zu einer Oberseite 69 der Konsole 67 angeordneten ersten Achse 19 wird bei diesem Ausführungsbeispiel mittels einer Sechskantverbindung 71 realisiert, auf die der erste Schwenkhebel 9 mit einer nicht näher dargestellten Aufnahme 73 aufsteckbar ist. Alternativ kann die drehfeste Verbindung zwischen dem ersten Schwenkhebel 9 und der ersten Achse 19 beispielsweise auch mittels Kraftschluss erfolgen. Dazu kann die Achse 19 als "Standard-Welle" ausgeführt sein, die einen Rändelkonus aufweist, der mit einer entsprechend ausgebildeten Aufnahme am ersten Schwenkhebel zusammenwirkt. Der zweite Schwenkhebel 11 ist mit einer nicht näher dargestellten Aufnahme 75 auf die im wesentlichen parallel zur ersten Achse 19 verlaufende zweite Achse 23 aufsteckbar, wobei die Aufnahme 75 derart an die zweite Achse 23 angepasst ist, dass der zweite Schwenkhebel 11 frei um die feststehend angeordnete zweite Achse 23 drehbar ist.

Es wird deutlich, dass das Wischhebelgestänge 7 auch nachträglich mit der Antriebseinrichtung 29 in einfacher Weise zusammengefügt werden kann, nachdem die Antriebseinrichtung 29 bereits auf der mit der Karosserie des Fahrzeugs verbindbaren Konsole 67 angebracht ist.

Bei einem vorteilhaften Ausführungsbeispiel sind zumindest die ersten und zweiten Schwenkhebel 9, 11 als Druckguss- oder Blechbiegeteile ausgebildet.

Ein besonderer Vorteil der Scheibenwischanlage 1 besteht darin, dass die Drehachse des Wischarms 26, also die zweite Achse 23, als Blindlagerwelle ausgebildet ist, das heißt, über die zweite Achse 23 werden keine Drehmomente übertragen. Aufgrund dieser Ausgestaltung kann die zweite Lagerung 25 flachbauend ausgeführt werden.

Bei einer geeigneten Gestaltung des zweiten Schwenkhebels 11 oder einer daran angebrachten, beispielsweise aus Kunststoff bestehenden Abdeckung kann ein Haubenspalt zwischen der Motorhaube und der Frontscheibe 3 formschön verdeckt werden. Ferner ist eine flachbauende Konstruktion des Wischarms 26 möglich, so dass die durch Fahrtwind verursachten Windgeräusche nur relativ gering sind.

Die Ausgestaltung des Wischhebelgestänges 7 und die der Antriebseinrichtung 29 ermöglicht eine vollständige Unterbringung der Scheibenwischanlage 1 unter der Motorhaube, so dass diese die Optik des Fahrzeugs nicht beeinflusst.

Die Ausgestaltung des anhand der Figuren beschriebenen Wischhebelgestänges 7 ermöglicht ferner die Verwendung von Teilen der Antriebseinrichtung des bekannten 4-Gelenk-Wischhebelgestänges, wobei die Teile der Antriebseinrichtung identisch übernommen oder gegebenenfalls beispielsweise durch Längenänderung an das Wischhebelgestänge 7 entsprechend angepasst werden können.

## Patentansprüche

1. Scheibenwischanlage (1) für Fahrzeuge mit mindestens einem mindestens einen Wischarm (26) aufweisenden Wischhebelgestänge (7), das einen mit einer ortsfesten ersten Achse (19) drehfest koppelbaren ersten Schwenkhebel (9) und einen um eine ortsfest angeordnete zweite Achse (23) frei drehbaren zweiten Schwenkhebel (11), wobei der erste Schwenkhebel (9) über ein erstes Gelenk (15) und der zweite Schwenkhebel (11) über ein zweites Gelenk (17) mit einem Koppelelement (13) verbunden sind, und mit einer Antriebseinrichtung (29), die eine in einem Abstand zu den ersten und zweiten Achsen (19,23) angeordnete Antriebswelle (31) aufweist, mit deren Hilfe mindestens eine Gelenkstange (37) oszillierend verlagerbar ist, wobei die Gelenkstange (37) über ein Gelenk (43) mit einem drehfest mit der ersten Achse (19) gekoppelten Koppelteil (45) verbunden ist, wobei die drehfeste Verbindung zwischen dem ersten Schwenkhebel (9) und der ersten Achse (19) und/oder die Verbindung zwischen dem zweiten Schwenkhebel (11) und der zweiten Achse (23) lösbar sind/ist.

2. Scheibenwischanlage nach Anspruch 1, **dadurch gekennzeichnet, dass** die zweite Achse (23) unmittelbar neben einer A-Säule der Karosserie des Fahrzeugs und/oder eines Motorhaubenscharniers angeordnet ist.

3. Scheibenwischanlage nach einem der vorhergehenden Ansprüche, **dadurch gekennzeichnet, dass** die erste Achse (19) zwischen der Antriebswelle (31) und der zweiten Achse (23) angeordnet ist.

4. Scheibenwischanlage nach einem der vorhergehenden Ansprüche, **dadurch gekennzeichnet, dass** der Abstand zwischen den ersten und zweiten Achsen (19;23) kleiner, vorzugsweise deutlich kleiner, ist als der Abstand zwischen der Antriebswelle (31) und der ersten Achse (19).

5. Scheibenwischanlage nach einem der vorhergehenden Ansprüche, **dadurch gekennzeichnet, dass** der Wischarm (26) an einem der Schwenkhebel (9; 11), vorzugsweise am zweiten Schwenkhebel (11), befestigbar ist.

6. Scheibenwischanlage nach einem der vorhergehenden Ansprüche, **dadurch gekennzeichnet, dass** die ersten und zweiten Gelenke (15;17) als Kugelgelenke ausgebildet sind.

7. Scheibenwischanlage nach einem der vorhergehenden Ansprüche, **dadurch gekennzeichnet, dass** am Wischarm (26) mindestens eine mit einer unter Druck stehenden Flüssigkeit beaufschlagbare Düse angeordnet ist.

8. Scheibenwischanlage nach einem der vorhergehenden Ansprüche, **dadurch gekennzeichnet, dass** die ersten und zweiten Schwenkhebel (9;11) als Druckguss- oder Blechbiegeteile ausgebildet sind.

## Claims

1. Windscreen wiper arrangement (1) for vehicles, with at least one wiper arm linkage (7) which has at least one wiper arm (26) which has a first pivoting lever (9), which can be coupled in a rotationally fixed manner to a positionally fixed first spindle (19), and a second pivoting lever (11), which can rotate freely about a second spindle (23) arranged in a positionally fixed manner, the first pivoting lever (9) being connected to a coupling element (13) via a first joint (15) and the second pivoting lever (11) being connected to a coupling element (13) via a second joint (17), and a driving device (29) which has a drive shaft (31), which is arranged at a distance from the first and second spindles (19, 23) and with the aid of which at least one articulated rod (37) can be moved in an oscillating manner, the articulated rod (37) being connected via a joint (43) to a coupling part (45) coupled in a rotationally fixed manner to the first spindle (19), the rotationally fixed connection between the first pivoting lever (9) and the first spindle (19) and/or the connection between the second pivoting lever (11) and the second spindle (23) being releasable.

2. Windscreen wiper arrangement according to Claim 1, **characterized in that** the second spindle (23) is arranged directly next to an A-pillar of the vehicle body and/or a bonnet hinge.

3. Windscreen wiper arrangement according to one of the preceding claims, **characterized in that** the first spindle (19) is arranged between the drive shaft (31) and the second spindle (23).

4. Windscreen wiper arrangement according to one of the preceding claims, **characterized in that** the distance between the first and second spindles (19; 23) is smaller, preferably significantly smaller, than the distance between the drive shaft (31) and the first spindle (19).

5. Windscreen wiper arrangement according to one of the preceding claims, **characterized in that** the wiper arm (26) can be fastened to one of the pivoting levers (9; 11), preferably to the second pivoting lever (11).

6. Windscreen wiper arrangement according to one of the preceding claims, **characterized in that** the first and second joints (15; 17) are designed as ball-and-socket joints.

7. Windscreen wiper arrangement according to one of the preceding claims, **characterized in that** at least one nozzle which can be charged with a pressurized liquid is arranged on the wiper arm (26).

8. Windscreen wiper arrangement according to one of the preceding claims, **characterized in that** the first and second pivoting levers (9; 11) are designed as diecast parts or sheet-metal bent parts.

## Revendications

1. Installation d'essuie-glace sur un véhicule comportant au moins un bras d'essuie-glace (26) ayant une tringlerie à levier (7) avec un premier levier oscillant (9) susceptible d'être couplé à un premier axe fixe (19) de manière solidaire en rotation et un second levier oscillant (11) monté libre en rotation autour d'un second axe (23) fixe en position,
le premier levier oscillant (9) étant relié par une première articulation (15) et le second levier oscillant (11) étant relié par une seconde articulation (17) à un élément de couplage (13), et une installation d'entraînement (29) ayant un axe d'entraînement (31) distant du premier et du second axe (19 ; 23) et qui permet de déplacer au moins une biellette (37) dans laquelle suivant un mouvement oscillant, la biellette (37) est reliée par une articulation (43) à une pièce de couplage (45) couplée solidairement en rotation au premier axe (19), et
la liaison solidaire en rotation entre le premier levier oscillant (9) et le premier axe (19) et/ou la liaison entre le second levier oscillant (11) et le second axe (23) sont amovibles.

2. Installation d'essuie-glace selon la revendication 1
**caractérisée en ce que**
le second axe (23) est prévu directement à côté de la colonne (A) de la carrosserie du véhicule et/ou de l'articulation du capot du moteur.

3. Installation d'essuie-glace selon l'une des revendications précédentes
**caractérisée en ce que**
le premier axe (19) est installé entre l'axe d'entraînement (31) et le second axe (23).

4. Installation d'essuie-glace selon l'une des revendications précédentes
**caractérisée en ce que**
la distance entre le premier et le second axe (19 ; 23) est inférieure et de préférence significativement inférieure à la distance entre l'axe d'entraînement (31) et le premier axe (19).

5. Installation d'essuie-glace selon l'une des revendications précédentes
**caractérisée en ce que**
le bras d'essuie-glace (26) est fixé à l'un des leviers oscillant (9 ; 11), de préférence au second levier oscillant (11).

6. Installation d'essuie-glace selon l'une des revendications précédentes
**caractérisée en ce que**
la première et la seconde articulation (15 ; 17) sont des articulations à rotule.

7. Installation d'essuie-glace selon l'une des revendications précédentes
**caractérisée en ce que**
le bras d'essuie-glace (26) comporte au moins une buse recevant du liquide sous pression.

8. Installation d'essuie-glace selon l'une quelconque des revendications précédentes
**caractérisée en ce que**
le premier et le second levier oscillant (9 ; 11) sont des pièces fabriquées par injection sous pression ou par emboutissage de tôle.
